(19) Europäisches Patentamt / European Patent Office / Office européen des brevets

(11) **EP 2 110 917 A2**

(12) **EUROPEAN PATENT APPLICATION**

(43) Date of publication:
   **21.10.2009 Bulletin 2009/43**

(51) Int Cl.:
   **H02H 3/093** *(2006.01)*    H02H 3/00 *(2006.01)*

(21) Application number: **09157332.9**

(22) Date of filing: **03.04.2009**

(84) Designated Contracting States:
   **AT BE BG CH CY CZ DE DK EE ES FI FR GB GR HR HU IE IS IT LI LT LU LV MC MK MT NL NO PL PT RO SE SI SK TR**

(30) Priority: **15.04.2008 US 103244**

(71) Applicant: **General Electric Company**
   **Schenectady, NY 12345 (US)**

(72) Inventors:
   • **Vicente, Nataniel Barbosa**
     **Prospect, KY 40059 (US)**
   • **Culler, Mark**
     **Prospect, KY 40059 (US)**

   • **Lenhart Jr., Brian**
     **Louisville, KY 40291 (US)**
   • **Valdes, Marcelo Esteban**
     **Burlington, CT 06013 (US)**
   • **Greenwood, Todd**
     **Pewee Valley, KY 40056 (US)**

(74) Representative: **Illingworth-Law, William Illingworth**
   **Global Patent Operation - Europe**
   **GE International Inc.**
   **15 John Adam Street**
   **London WC2N 6LU (GB)**

(54) **Method of setting a ground fault trip function for a trip unit and a trip unit having a defined trip function for ground fault protection**

(57)    A method (20) of setting a trip ground fault trip function for a trip unit (4) includes enabling a ground fault protection mode for the trip unit (4), and setting one of a plurality of a trip functions (60, 80) for the trip unit. At least one of the plurality of trip functions (60, 80) being an I^4t inverse time function (100) that establishes a trip characteristic to interrupt current upon sensing a ground fault indication. The method further includes monitoring an electrical circuit (10) for a ground fault.

FIG. 2

EP 2 110 917 A2

**Description**

BACKGROUND

The present invention pertains to the art of electric circuit trip units and, more particularly, to a method of setting a ground fault trip function for a trip unit.

Circuit breakers are used to protect electrical circuits from damage due to an overload condition or a relatively high level short circuit condition. Upon sensing an overload or short circuit condition, the circuit breaker interrupts power to the electric circuit to prevent, or at least minimize, damage to circuit components. Many industrial circuit breakers employ a trip unit that may be programmed for a particular trip characteristic. In many cases, the trip characteristic is based on an inverse time function that accelerates interruption time as current increases.

Generally, the trip characteristic is based on a slope that establishes a reaction time for the circuit breaker. Trip characteristic are based on a number of different slope forms that are selected to match system protection requirements/ parameters. The slope forms, or inverse time response curves, generate a trip response time that is inversely proportional to current. That is, the greater the current the faster the response time. Slope forms can be selected from constant slope forms, or inverse time functions such as I^2t (ampere-square-seconds) and I^4t (ampere-to-the-fourth-power-seconds) or other shapes described by more complex functions. Many trip units also employ ground fault protection circuitry that interrupts an associated electrical circuit upon sensing a current flowing to ground via an undesired path. In the case of a ground fault, leakage current must exist for a period of time before the circuit is interrupted. Towards that end, ground fault protection circuits employ a fixed time delayed, or definite time response, trip or are limited to I^2t inverse time functions similar to that employed in circuit breakers short time characteristics for normal overload protection and also demonstrated by thermal magnetic circuit breakers.

BRIEF DESCRIPTION

In accordance with one exemplary embodiment of the invention, a method of setting a ground fault trip function for a trip unit includes enabling a ground fault protection mode for the trip unit, and setting one of a plurality of a trip functions for the trip unit. At least one of the plurality of trip functions being an I^4t ($I^4t$) inverse time function that establishes a trip characteristic to interrupt current upon sensing a ground fault indication. The method further includes monitoring an electrical circuit for a ground fault.

In accordance with another exemplary embodiment of the invention, a trip unit for a circuit interrupter includes a ground fault sensing unit operatively coupled to an electrical circuit. The ground fault sensing unit provides a ground fault signal corresponding to current flow in the electrical circuit. The trip unit also includes a trip device operatively coupled to the electrical circuit. The trip device interrupts current flow in the electrical circuit based upon the ground fault signal provided by the sensing unit. In addition, the trip unit includes a processor operatively coupled to the trip device. The processor establishes one of a plurality of trip functions for the trip device. At least one of the plurality of trip functions being an I^4t inverse time function. The I^4t inverse time function establishes a trip characteristic for the trip device to interrupt current flow based on the ground fault signal.

In accordance with yet another exemplary embodiment of the invention, a system for monitoring an electric circuit for a ground fault indication includes a trip unit including a central processor. The central processor is interconnected functionally via a system bus to a ground fault sensor, a user interface adapter, and at least one memory device thereupon stored a set of instructions. The set of instructions which, when executed by said processor causes said system to monitor an electrical circuit for a ground fault indication, and interrupt the electrical circuit upon sensing a ground fault condition based on a trip function. The trip function includes at least one I^4t inverse time function option that is set in the processor though the user interface.

BRIEF DESCRIPTION OF THE DRAWINGS

FIG. 1 is a schematic representation of a trip unit including an I^4t ground fault trip function in accordance with an exemplary embodiment of the invention;

FIG. 2 is a flow chart illustrating a method of setting an I^4t ground fault trip function for a trip unit in accordance with an exemplary embodiment of the invention;

FIG. 3 is a graph illustrating I^4t ground fault trip functions plotted on a logarithmic scale for the trip unit of FIG. 1;

FIG. 4 is a graph illustrating I^4t ground fault trip functions compared with typical fuse trip functions plotted on a logarithmic scale; and

FIG. 5 is a graph illustrating I^4t ground fault trip functions compared with typical circuit breaker trip functions plotted on a logarithmic scale.

DETAILED DESCRIPTION

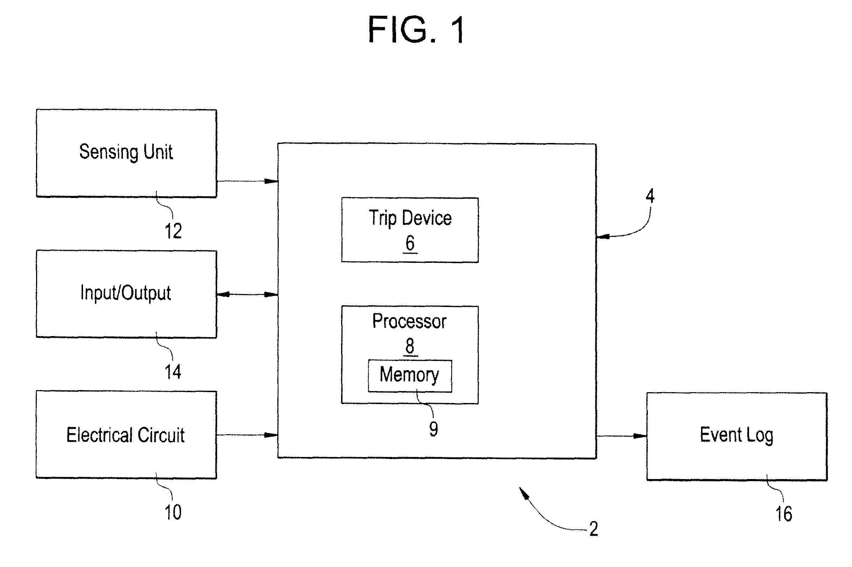

With initial reference to FIG. 1, a system for monitoring a circuit for ground faults is indicated generally at 2. Ground fault (GF) monitoring system 2 includes a circuit interrupter trip unit 4 having a trip device 6 and a processor or CPU 8 having an associated memory 9. Trip unit 4 is operatively coupled to an electrical circuit 10 and a ground fault sensing unit 12. Ground fault sensing unit 12 monitors electrical circuit 10 for current leakages to ground. Upon sensing a current leakage, sensing unit 12 signals processor 6 to activate trip device 6 and interrupt current flow in electrical circuit 10. As will be discussed more fully below, trip device 6 interrupts current to electrical circuit 10 based on a trip characteristic established by a ground fault trip function. The particular ground fault trip function employed is user selectable so as to match protection requirements for electrical circuit 10. That is, trip unit 4 is coupled to a user interface adaptor or input/output device 14 that allows a user to select various operating parameters for trip device 6. The operating parameters establish desired response/trip times as well as provide coordination with downstream fuses and/or circuit breakers (not shown). Input/output device 14 also provides alarms to notify personnel of a problem with electrical circuit 10 in the event of a circuit interruption. In addition to providing alarms, trip unit 4 logs each sensed leakage and/or circuit interruption in an event log 16.

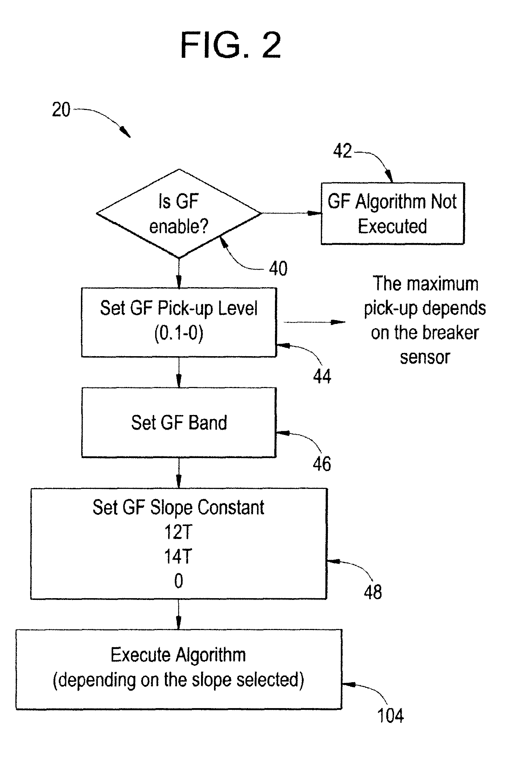

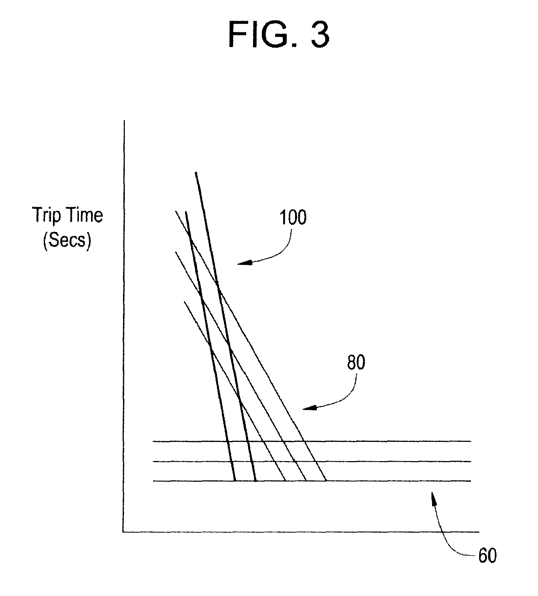

Reference will now be made to FIGS. 2 and 3 in describing a method 20 of selecting a monitoring algorithm for trip unit 4. Initially, a determination is made whether ground fault protection is enabled for trip unit 4 as indicated in block 40. If ground fault protection is not enabled, the monitoring algorithm is not executed as indicated in block 42. If however, ground fault protection is enabled, a ground fault pick up level or threshold is established as indicate din block 44. Ground fault pickup is generally between 0.1 and 1 milliamps depending on breaker sensor parameters. After selecting the ground fault pick up threshold, a ground fault band is established as indicated in block 46.

Once the ground fault band is selected in block 46, a ground fault trip function or slope is selected as indicated in block 48. Trip unit 4 includes a plurality of ground fault trip function options. The particular option chosen depends or circuit component and/or breaker parameters for electrical circuit 10. As best shown in FIG. 3, processor 8 can be programmed with one of a plurality of constant ground fault trip functions indicated generally at 60, one of a plurality of inverse time functions, such as $I^2t$ functions 80 and in accordance with an exemplary embodiment of the invention, $I^4t$ (ampere-to-the-fourth-power-seconds) functions, two of which are indicated generally at 100. When an $I^4t$ time or trip function is selected, pickup threshold is determined by the formula:

$$\text{Pickup threshold} = P_{GF} * I_{GN}{}^{4}$$

Where $P_{GF}$ is ground fault pickup and $I_{GN}$ is ground fault current.

By providing trip unit 4 with $I^4t$ trip functions, GF monitoring system 2 provides personnel with a greater level of flexibility in designing circuit protection schemes. Once the particular trip function is selected in block 48, the monitoring algorithm is executed and indicated in block 104 and GF monitoring system 2 is enabled to provide ground fault protection for electrical circuit 10. At this point, ground fault protection is executed every half cycle, e.g., every 10 ms for 50Hz and every 8.33 ms for 60 Hz. During ground fault protection accumulator heating will occur per the selected ground fault trip function. When an $I^4t$ function is selected, Accumulator threshold is determined by the formula:

$$\text{Accumulator threshold} = 2\,K_{GF} * f * \text{Pickup threshold}.$$

Where

$$K_{GF} = \text{the trip function } I^4t;$$

and f is the frequency.

Once the accumulator exceeds the accumulator threshold, a trip or circuit interruption occurs.

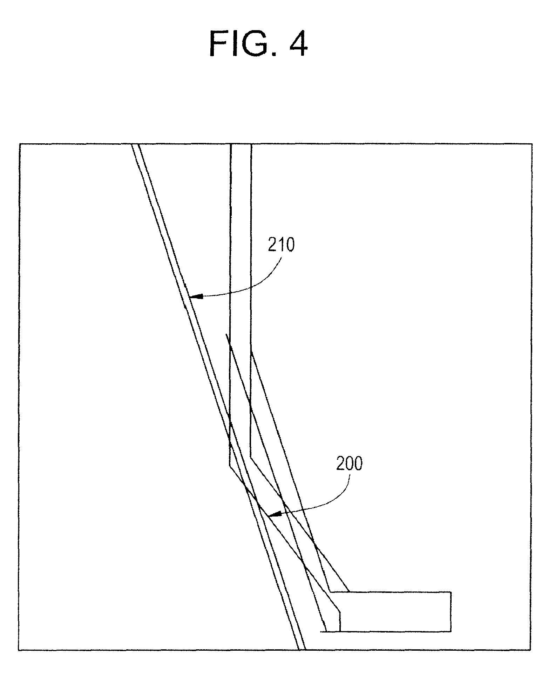

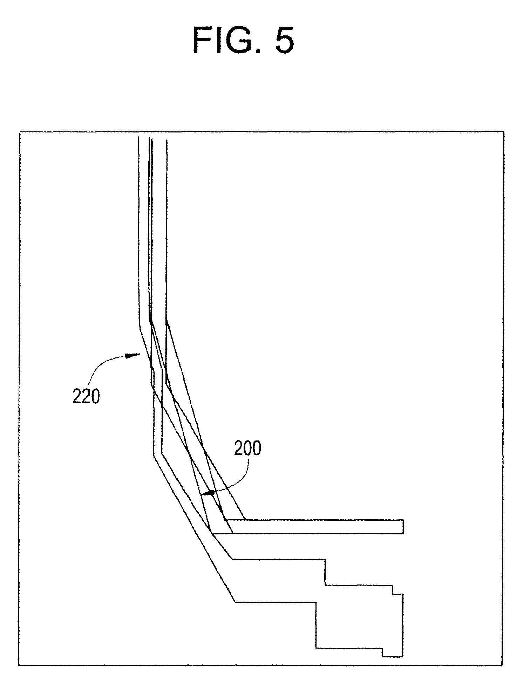

At this point it should be understood that the present invention provides a ground fault circuit monitoring system having greater flexibility than previously possible with existing circuit protection schemes. By enabling personnel to select between multiple ground fault trip functions, that includes $I^4t$ inverse time functions, the present invention provides a system that provides a level of circuit protection that match overload and short circuit protection speeds when desired. That is, as best shown in FIG. 4 and 5, providing ground fault trip units with I^4t inverse time functions such as indicated at 200, closer coordination is possible with downstream fuse trip functions, such as shown at 210 in FIG. 4 and circuit breaker trip functions such as shown at 220 in FIG. 5.

In general, this written description uses examples to disclose the invention, including the best mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of exemplary embodiments of the present invention if they have structural elements that do not differ from the literal language of the claims, or if they include equivalent structural elements with insubstantial differences from the literal language of the claims.

**Claims**

1. A method (20) of setting a ground fault trip function for a trip unit (4), the method comprising:

   enabling a ground fault protection mode for the trip unit (4);
   setting one of a plurality of a trip functions (60, 80) for the trip unit (4), at least one of the plurality of trip functions being an I^4t inverse time function (100) that establishes a trip characteristic to interrupt current upon sensing a ground fault indication; and
   monitoring an electrical circuit (10) for a ground fault.

2. The method of claim 1, wherein setting one of the plurality of trip functions (60, 80) for the trip unit includes selecting one of a plurality of I^4t inverse time functions that establish the trip characteristic.

3. The method of claim 1 or claim 2, wherein setting one of the plurality of trip functions includes programming a processor (8) provided within the trip unit (4) to set one of the plurality of trip functions (60, 80).

4. A trip unit for a circuit interrupter comprising:

   a ground fault sensing unit operatively coupled to an electrical circuit, the sensing unit providing a ground fault signal corresponding to current flow in the electrical circuit;
   a trip device operatively coupled to the electrical circuit, the trip device interrupting current flow in the electrical circuit based upon the ground fault signal provided by the sensing unit;
   a processor operatively coupled to the trip device, the processor establishing one of a plurality of trip functions for the trip device, at least one of the plurality of trip functions being an I^4t inverse time function, the I^4t inverse time function establishing a trip characteristic for the trip device to interrupt current flow based on the ground fault signal.

5. The trip unit according to claim 4, further comprising: an input device operatively coupled to the processor, the input device selectively setting one of the plurality of trip functions for the trip device.

6. The trip unit according to claim 4 or claim 5, wherein at least two of the plurality of trip functions are I^4t inverse time functions.

7. A system for monitoring an electric circuit for a ground fault indication comprising:

   a trip unit including a central processor, said central processor being interconnected functionally via a system bus to:
   a ground fault sensor;
   a user interface adapter; and
   at least one memory device thereupon stored a set of instructions which, when executed by said processor causes said system to:
   monitor an electrical circuit for a ground fault indication; and
   interrupt the electrical circuit upon sensing a ground fault condition based on a trip function, the trip function including at least one I^4t inverse time function option, the at least one I^4t inverse time function option being set in the processor though the user interface.

8. The system according to claim 7, wherein the set of instructions which, when executed by said processor causes said system to: interrupt power to the electrical circuit upon sensing a ground fault condition based on the trip function including at least two I^4t inverse time function options.

# FIG. 1

EP 2 110 917 A2

# FIG. 2

20

42 — GF Algorithm Not Executed

Is GF enable? — 40

The maximum pick-up depends on the breaker sensor

Set GF Pick-up Level (0.1-0) — 44

Set GF Band — 46

Set GF Slope Constant
12T
14T
0
— 48

Execute Algorithm (depending on the slope selected) — 104

# FIG. 3

Trip Time
(Secs)

100

80

60

# FIG. 4

# FIG. 5